# EUROPÄISCHE PATENTSCHRIFT

(11) **EP 2 131 087 B1**
(45) Veröffentlichungstag und Bekanntmachung des Hinweises auf die Patenterteilung: **03.08.2011**
(21) Anmeldenummer: 09005736.5
(22) Anmeldetag: 23.04.2009
(51) Int. Cl.: F16L 25/00

(54) **Verfahren zur Herstellung einer Verbindung zwischen einem Wellschlauch und einem weiteren Körper**
Method for creating a connection between a corrugated hose and another body
Procédé de fabrication d'une liaison entre un tuyau ondulé et un corps supplémentaire

(30) Priorität: 08.05.2008 DE 102008022687
(43) Veröffentlichungstag der Anmeldung: 09.12.2009
(73) Patentinhaber: Liebherr-Aerospace Lindenberg GmbH, 88161 Lindenberg/Allgäu (DE)
(72) Erfinder: Bildstein, Markus, Dipl.-Ing.(FH), 87534 Oberstaufen (DE)
(74) Vertreter: Herrmann, Uwe

(56) Entgegenhaltungen:
- WO-A-2008/028104
- US-B1- 6 173 995

## Beschreibung

Die Erfindung betrifft ein Verfahren zur Herstellung einer Verbindung zwischen einem Wellschlauch und einem weiteren Körper.

In Flugzeugen sind Kabel zur Daten- und/oder Stromübertragung derart zu verlegen, dass sie vor mechanischer Beschädigung, vor Verschmutzung sowie vor elektromagnetischer Einstrahlung geschützt sind, um eine ungestörte Datenübertragung bzw. zuverlässige Stromversorgung sicherzustellen. Ein Wellschlauch aus Metall erfüllt diese Voraussetzungen, sofern sichergestellt ist, dass dieser mechanisch fest, dicht und elektrisch leitend angebunden werden kann.

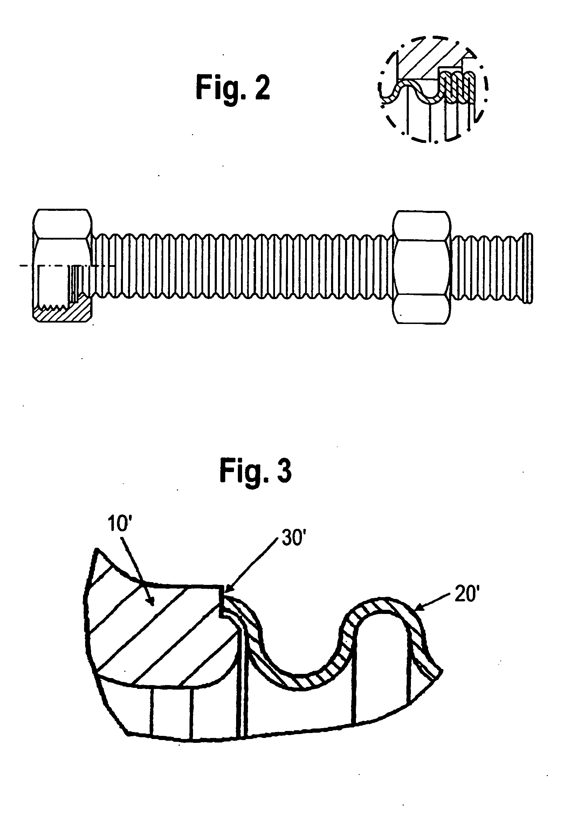

Aus dem Stand der Technik ist es bekannt, die Wellschlauchanbindung dadurch zu erreichen, dass das Wellschlauchende gestaucht und sodann mit einer Überwurfmutter geklemmt wird, wie dies in Figur 2 dargestellt ist.

Ein weiteres bekanntes Verfahren besteht darin, dass der Wellschlauch 20' gemäß Figur 3 mit dem anzubindenden Körper 10' durch eine Schweiß- oder Lötverbindung 30 verbunden wird.

Aus der WO 2008/028104 A2 ist ein Verfahren zur Herstellung einer Verbindung zwischen einem Wellschlauch und einem Anschlussstück nach der Crimp-Methode bekannt. Gemäß dem darin offenbarten Verfahren wird der Wellschlauch in eine Nut des Adapterstücks geführt und mittels eines Crimp-Werkzeuges durch Druckausübung in radialer Richtung eine plastische Verformung von Anschlussstück und Schlauch erreicht.

Die US 6,173,995 B1 sieht ein ähnliches Verfahren vor, wobei die Druckkraft auf das Anschlussstück und den Wellschlauch in radialer Richtung durch Anziehen einer Gewindemutter erzeugt wird.

Der vorliegenden Erfindung liegt die Aufgabe zugrunde, ein Verfahren der eingangs genannten Art dahingehend weiterzubilden, dass eine zuverlässige, kostengünstige, elektrisch leitende und platzsparende Anbindung des Wellschlauches ermöglicht wird.

Diese Aufgabe wird durch ein Verfahren mit den Merkmalen des Anspruchs 1 gelöst.

Erfindungsgemäß ist vorgesehen, dass der Körper, mit dem der Wellschlauch zu verbinden ist, eine Bohrung mit einen Bohrungsdurchmesser aufweist, der geringer ist als der Außendurchmesser des Wellschlauches, wobei das Verfahren den Schritt des Einziehens oder Einpressens des Wellschlauches in die Bohrung umfasst. Zumindest ein Teilabschnitt des Wellschlauches, der in der Bohrung aufzunehmen ist, weist vor dem Einziehen oder Einpressen somit einen Außendurchmesser auf, der größer ist als der Innendurchmesser der Bohrung.

Dabei ist vorzugsweise vorgesehen, dass der Wellschlauch und/oder der weitere, anzubindende Körper aus Metall bestehen oder Metall aufweisen.

Vorzugsweise ist weiter vorgesehen, dass vor dem Einziehen oder Einpressen eine Durchmesserverringerung der ersten, im Scheitelpunkt geschnittenen Wellung des Wellschlauches erfolgt. Diese Durchmesserverringerung kann durch Längen bzw. Dehnen der ersten Wellung des Wellschlauches erfolgen. Alternativ oder zusätzlich kann vorgesehen sein, dass die Durchmesserverringerung durch Abschneiden des Wellschlauches erfolgt. Vorzugsweise ist vorgesehen, dass nur die erste Wellung des Wellschlauches zunächst gestreckt wird und dass diese sodann im Bereich des nach außen gerichteten Wellenberges abgeschnitten wird.

Das Einpressen des Wellschlauches kann dadurch erfolgen, dass ein Spreiz- und/oder Presswerkzeug in den Innenraum des Wellschlauches eingesetzt und dass sodann auf das Spreiz- und/oder Presswerkzeug eine in Einführrichtung wirkende Kraft ausgeübt wird.

Das Spreiz- oder Presswerkzeug kann derart in den Wellschlauch eingesetzt werden, dass dieses an der Innenschulter der ersten nicht verformten Welle angesetzt wird.

Der Wellschlauch ist vorzugsweise derart ausgebildet, dass der Wellschlauch elastisch zurückfedert, sobald keine Kraft mehr auf das Spreiz- oder Presswerkzeug ausgeübt wird, wodurch sich eine reibschlüssige Verbindung zwischen der Außenseite des Wellschlauches und der Innenwandung der Bohrung ergibt. Durch diesen Pressverbund wird bereits eine gute mechanische Fixierung des Wellschlauches in der Bohrung erreicht.

Die Bohrung kann einen Bohrungsgrund aufweisen, wobei sich um Umfangsbereich des Bohrungsgrundes eine Hinterschneidung befindet, die einen größeren Durchmesser aufweist als die Bohrung als solche.

Weiterhin kann vorgesehen sein, dass durch das Einziehen oder Einpressen des Wellschlauches im Endbereich des Wellschlauches eine neue Welle geformt wird, die wenigstens bereichsweise in der Hinterschneidung aufgenommen ist. Auf diese Weise wird zusätzlich zu der genannten kraftschlüssigen Verbindung eine axiale Fixierung durch Formschluss erreicht.

Die Verbindung zwischen Wellschlauch und dem weiteren Körper liegt vorzugsweise über den gesamten Umfang des Wellschlauches vor, so dass sich eine 360°-Schirmung vor elektromagnetischer Einstrahlung ergibt.

Um eine weiter verbesserte Dichtigkeit und/oder weiter erhöhte mechanische Festigkeit zu erreichen, kann vorgesehen sein, dass der Wellschlauch wenigstens in seinem in der Bohrung aufzunehmenden Bereich und/oder die Bohrungsinnenwandung und/oder der Bohrungsgrund mit einem Dicht- und/oder Klebefluid versehen wird.

Die Erfindung betrifft des Weiteren eine Anordnung mit einem Wellschlauch und einem damit verbundenen Körper, die dadurch gekennzeichnet ist, dass die Verbindung zwischen dem Wellschlauch und dem Körper nach einem Verfahren gemäß einem der Ansprüche 1 bis 12 vorgenommen wurde. Die Erfindung betrifft schließlich ein Luftfahrzeug mit wenigstens einer Anordnung gemäß Anspruch 13.

Weitere Einzelheiten und Vorteile der Erfindung werden anhand eines in der Zeichnung dargestellten Ausführungsbeispiels erläutert:
Figur 1 zeigt die Verfahrensschritte zur Herstellung der Verbindung zwischen dem Wellschlauch und dem mit diesem zu verbindenden Körper gemäß der vorliegenden Erfindung,
Figur 2 zeigt ein bekanntes Verfahren zur Wellschlauchanbindung durch Klemmen mittels Überwurfmutter und
Figur 3 zeigt ein bekanntes Verfahren zur Wellschlauchanbindung durch Schweißen oder Löten.

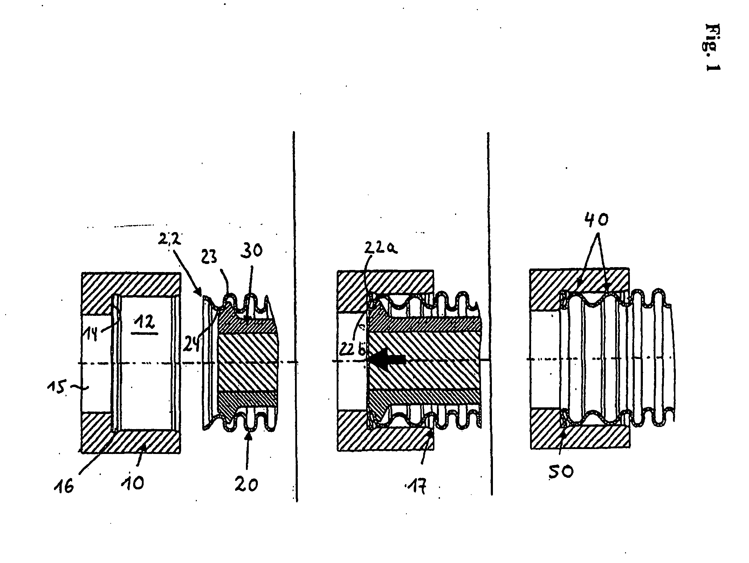

In Figur 1 ist mit dem Bezugszeichen 10 ein metallischer Körper dargestellt, mit dem der Wellschlauch 20 verbunden werden soll. Der Körper 10 weist eine Bohrung 12 auf, die einen Bohrungsgrund 14 aufweist, der seinerseits von einer weiteren Bohrung 15 durchsetzt ist, die einen geringeren Durchmesser aufweist, als die Bohrung 12. Die Bohrung 12 ist in ihrem an den Bohrungsgrund 14 grenzenden Bereich im Durchmesser vergrößert, wobei die Durchmesservergrößerung durch eine umlaufende Nut bzw. Hinterdrehung 16 gebildet wird.

Der Wellschlauch 20 besteht ebenfalls aus Metall und dient zur Aufnahme von nicht dargestellten Kabeln zur Daten- und/oder Stromübertragung.

Da der Außendurchmesser des nicht in die Bohrung 12 eingezogenen Wellschlauches 20 größer ist als der Innendurchmesser der Bohrung 12 des Körpers 10 wird zunächst in einem ersten Schritt der Endbereich des Wellschlauches 20 derart verformt, dass dessen Außendurchmesser etwas geringer ist als der Innendurchmesser der Bohrung 12. Dies kann beispielsweise dadurch geschehen, dass die erste Wellung 22 des Wellschlauches 20 gelängt, d.h. gedehnt / gestreckt wird, so dass sich der Außendurchmesser dieser Wellung 22 soweit verringert, dass er etwas kleiner ist als der Innendurchmesser der Bohrung 12. Sodann kann der Wellschlauch 20 im Bereich dieser Wellung 22, vorzugsweise in deren Scheitelbereich abgetrennt werden, wie dies in Figur 1, linke Darstellung gezeigt ist.

Anschließend wird ein Spreiz- und/oder Presswerkzeug 30 in das Innere des Wellschlauches 20 derart eingeführt, dass das Spreiz- und/oder Presswerkzeug 30 von Innen an der der verformten Wellung 22 benachbarten, unverformten Wellung 23 anliegt, wie dies aus Figur 1, linke Darstellung hervorgeht. In anderen Worten wird das Spreiz- und/oder Presswerkzeug 30 an der Schulter der ersten Wellentals 24 angelegt.

Sodann werden die umlaufende Wandung der Bohrung 12 und/oder der Bohrungsgrund 14 sowie die Wellungen, die sich nach dem Einziehen des Wellschlauches voraussichtlich in der Bohrung 12 befinden, mit einem Dichtungs- und Klebefluid benetzt. Gemäß dem in Figur 1 dargestellten Ausführungsbeispiel gilt dies für die verformte Wellung sowie für die beiden sich anschließenden nicht verformten Wellungen. Selbstverständlich ist es ebenso möglich, zunächst das genannte Fluid aufzutragen und dann das Spreiz- und/oder Presswerkzeug 30 einzusetzen.

Wie dies aus Figur 1, mittlere Darstellung hervorgeht, wird der Wellschlauch 20 sodann durch axiale Kraftausübung auf das Spreiz- und/oder Presswerkzeug in die Bohrung 12 des Körpers 10 hineingepresst. Dies ist Figur 1, mittlere Darstellung durch den Pfeil angedeutet. Dies hat eine Durchmesserverringerung der eingepressten Wellungen zur Folge, die nun mit ihrer Außenseite an der Innenwandung der Bohrung 12 anliegen. Nach Entlastung des Spreiz- und/oder Presswerkzeug ergibt sich aufgrund des Rückfederns des Wellschlauches 20 ein Pressverbund zwischen Wellschlauch 20 und der Bohrung 12 des Körpers 10. Dies ist in Figur 1, rechte Darstellung mit dem bezugszeichen 40 angedeutet.

Mit dem Bezugszeichen 17 ist in Figur 1, mittlere Darstellung eine abgeschrägte Kante der Bohrung 12 gekennzeichnet, die ein Einführen der Wellungen des Wellschlauches 20 in die Bohrung 12 erleichtert.

Wie dies aus Figur 1, mittlere Darstellung weiter hervorgeht, wird der Wellschlauch 20 soweit in die Bohrung 12 eingepresst, bis die oben genannte erste Wellung 22 mit ihrem Endabschnitt 22a sowie mit einem weiteren, radial nach innen versetzten Abschnitt 22b, der dem ersten Wellental benachbart ist, an der Bohrungswand bzw. am Bohrungsgrund 14 anliegt, wie dies in Figur 1, mittlere Darstellung gezeigt ist. Dabei ist der Wellschlauch 20 soweit zusammengepresst, dass die Wandungen des ersten Wellentals sich berühren oder nur einen vergleichsweise geringen Abstand aufweisen.

Des Weiteren ist zumindest der Endbereich 22a des Wellschlauches 20 in der Hinterdrehung 16 aufgenommen, so dass sich ein Formschluss zwischen der Bohrung 12 und der rückgeformten ersten Wellung in axialer Richtung ergibt. Dies ist in Figur 1, rechte Darstellung mit dem Bezugszeichen 50 angedeutet.

Nach dem Einpressvorgang wird das Spreiz- und/oder Presswerkzeug 30 wieder aus dem Innenraum des Wellschlauches 20 entfernt, so dass sich die in Figur 1, rechte Darstellung gezeigte Anordnung ergibt.

Der Wellschlauch 20 ist nun gegen Herausziehen einerseits durch formschlüssige Aufnahme der neu geformten ersten Wellung im Bereich der Hinterdrehung 16 und andererseits durch den genannten Pressverbund gesichert. Auf diese Weise wird zusammen mit dem Dichtungs- bzw. Klebefluid eine dichte Verbindung bereitgestellt. Der elektrische Übergangswiderstand ist infolge des metallischen Kontaktes gering. Der elektrische Kontakt erfolgt zuverlässig über den gesamten Umfang der in der Bohrung 12 aufgenommenen Wellungen des Wellschlauches, so dass sich ein wirksamer Schutz vor elektromagnetischer Einstrahlung ergibt (360° - Schirmung).

## Patentansprüche

1. Verfahren zur Herstellung einer Verbindung zwischen einem Wellschlauch (20) und einem weiteren Körper (10), **dadurch gekennzeichnet, dass** der weitere Körper (10) eine Bohrung (12) mit einem Bohrungsdurchmesser aufweist, der geringer ist als der Außendurchmesser des wellschlauches (20), wobei das Verfahren den Schritt des Einziehens oder Einpressens des Wellschlauches (20) in die Bohrung (12) umfasst.

2. Verfahren nach Anspruch 1, **dadurch gekennzeichnet, dass** der Wellschlauch (20) und/oder der weitere Körper (10) aus Metall bestehen oder Metall aufweisen.

3. Verfahren nach Anspruch 1 oder 2, **dadurch gekennzeichnet, dass** vor dem Einziehen oder Einpressen eine Durchmesserverringerung der ersten, im Scheitelpunkt geschnittenen Wellung (22) des Wellschlauches (20) erfolgt.

4. Verfahren nach Anspruch 3, **dadurch gekennzeichnet, dass** die Durchmesserverringerung durch Längen der ersten Wellung (22) des wellschlauches (20) erfolgt.

5. Verfahren nach Anspruch 3 oder 4, **dadurch gekennzeichnet, dass** die Durchmesserverringerung durch Abschneiden des Wellschlauche (20) erfolgt.

6. Verfahren nach einem der vorhergehenden Ansprüche, **dadurch gekennzeichnet, dass** das Einpressen des Wellschlauche (20) **dadurch** erfolgt, dass ein Spreiz- und/oder Presswerkzeug (30) in den Innenraum des Wellschlauches (20) eingesetzt und dass sodann auf das Spreiz- und/oder Presswerkzeug (30) eine in Einführrichtung wirkende Kraft ausgeübt wird.

7. Verfahren nach Anspruch 6, **dadurch gekennzeichnet, dass** das Spreiz- oder Presswerkzeug (30) derart eingesetzt wird, dass dieses an der Innenschulter der ersten nicht verformten Welle (23) angesetzt wird.

8. Verfahren nach Anspruch 6 oder 7, **dadurch gekennzeichnet, dass** der Wellschlauch (20) elastisch zurückfedert, sobald keine Kraft mehr auf das Spreiz- oder Presswerkzeug (30) ausgeübt wird, wodurch sich eine reibschlüssige Verbindung zwischen der Außenseite des Wellschlauches (20) und der Innenwandung der Bohrung (12) ergibt.

9. Verfahren nach einem der vorhergehenden Ansprüche, **dadurch gekennzeichnet, dass** die Bohrung (12) einen Bohrungsgrund (14) aufweist und dass sich im Umfangsbereich des Bohrungsgrundes (14) eine Hinterschneidung (16) befindet, die einen größeren Durchmesser aufweist als die benachbarten Bereiche der Bohrung (12).

10. Verfahren nach Anspruch 9, **dadurch gekennzeichnet, dass** durch das Einziehen oder Einpressen des Wellschlauches (20) im Endbereich des Wellschlau-(50) ches eine neue Welle (50) geformt wird, die wenigstens bereichsweise in der Hinterschneidung (16) aufgenommen ist.

11. Verfahren nach einem der vorhergehenden Ansprüche, **dadurch gekennzeichnet, dass** die Verbindung zwischen Wellschlauch (20) und dem weiteren Körper (10) über den gesamten Umfang des Wellschlauches (20) vorliegt, so dass Körper sich eine 360°-Schirmung ergibt.

12. Verfahren nach einem der vorhergehenden Ansprüche, **dadurch gekennzeichnet, dass** der Wellschlauch (20) wenigstens in seinem in der Bohrung (12) aufzunehmenden Bereich und/oder die Bohrungsinnenwandung mit einem Dicht- und/oder Klebefluid versehen wird, um eine verbesserte Dichtigkeit und/oder mechanische Festigkeit zu erreichen.

13. Anordnung mit einem Wellschlauch (20) und einem damit verbundenen Körper (10), **dadurch gekennzeichnet, dass** die Verbindung zwischen dem Wellschlauchl und (20) dem Körper (10) nach einem Verfahren gemäß einem der Ansprüche 1 bis 12 vorgenommen wurde.

14. Luftfahrzeug mit wenigstens einer Anordnung gemäß Anspruch 13.

## Claims

1. Method for producing a connection between a corrugated hose (20) and a further body (10), **characterized in that** the further body (10) has a hole (12) with a hole diameter that is less than the outside diameter of the corrugated hose (20), wherein the method comprises the step of drawing or pressing the corrugated hose (20) into the hole (12).

2. Method according to Claim 1, **characterized in that** the corrugated hose (20) and/or the further body (10) consist of metal or contain metal.

3. Method according to Claim 1 or 2, **characterized in that** the diameter of the first corrugation .(22) of the corrugated hose (20), which first corrugation is cut at the vertex, is reduced prior to drawing or pressing in.

4. Method according to Claim 3, **characterized in that** the diameter is reduced by the first corrugation (22) of the corrugated hose (20) being elongated.

5. Method according to Claim 3 or 4, **characterized in that** the diameter is reduced by the corrugated hose (20) being trimmed.

6. Method according to one of the preceding claims, **characterized in that** the corrugated hose (20) is pressed in by a spreading and/or pressing tool (30) being inserted into the interior of the corrugated hose (20) and then a force that acts in the direction of introduction being exerted on the spreading and/or pressing tool (30).

7. Method according to Claim 6, **characterized in that** the spreading or pressing tool (30) is inserted such that it is positioned against the inner shoulder of the first non-deformed corrugation (23).

8. Method according to Claim 6 or 7, **characterized in that** the corrugated hose (20) springs back elastically as soon as force is no longer being exerted on the spreading or pressing tool (30), as a result of which a frictional connection is produced between the outside of the corrugated hose (20) and the inner wall of the hole (12).

9. Method according to one of the preceding claims, **characterized in that** the hole (12) has a hole base (14) and **in that** in the circumferential region of the hole base (14) there is an undercut (16) which has a larger diameter than the adjacent regions of the hole (12).

10. Method according to Claim 9, **characterized in that** as a result of the corrugated hose (20) being drawn or pressed in, a new corrugation (50) is formed in the end region of the corrugated hose, at least part of said new corrugation (50) being accommodated in the undercut (16).

11. Method according to one of the preceding claims, **characterized in that** the connection between the corrugated hose (20) and further body (10) is present over the entire circumference of the corrugated hose (20), thereby producing 360° shielding.

12. Method according to one of the preceding claims, **characterized in that** the corrugated hose (20) is provided, at least in its region to be accommodated in the hole (12) and/or inner wall of the hole, with a sealing and/or adhesive fluid in order to improve the sealing and/or mechanical strength.

13. Arrangement having a corrugated hose (20) and body (10) which is connected thereto, **characterized in that** the corrugated hose (20) and the body (10) are connected by a method according to one of Claims 1 to 12.

14. Aircraft having at least one arrangement according to Claim 13.

## Revendications

1. Procédé d'établissement d'une liaison entre un tuyau ondulé (20) et un autre corps (10), **caractérisé en ce que** l'autre corps (10) présente un perçage (12) avec un diamètre de perçage qui est plus petit que le diamètre extérieur du tuyau ondulé (20), où le procédé comprend l'étape consistant à tirer ou enfoncer le tuyau ondulé (20) dans le perçage (12).

2. Procédé selon la revendication 1, **caractérisé en ce que** le tuyau ondulé (20) et/ou l'autre corps (10) sont en métal ou présentent du métal.

3. Procédé selon la revendication 1 ou 2, **caractérisé en ce qu'**avant l'insertion par traction ou par pression a lieu une réduction du diamètre de la première ondulation (22), coupée au sommet, du tuyau ondulé (20).

4. Procédé selon la revendication 3, **caractérisé en ce que** la réduction du diamètre a lieu par un allongement de la première ondulation (22) du tuyau ondulé (20).

5. Procédé selon la revendication 3 ou 4, **caractérisé en ce que** la réduction du diamètre a lieu par la coupe du tuyau ondulé (20).

6. Procédé selon l'une des revendications précédentes, **caractérisé en ce que** l'insertion par pression du tuyau ondulé (20) a lieu **en ce qu'**un outil d'écartement et/ou de compression (30) est inséré dans l'espace intérieur du tuyau ondulé (20) et qu'ensuite une force agissant dans la direction d'insertion est exercée sur l'outil d'écartement et/ou de compression (30).

7. Procédé selon la revendication 6, **caractérisé en ce que** l'outil d'écartement ou de compression (30) est inséré de telle sorte que celui-ci est appliqué à l'épaulement intérieur de la première ondulation non déformée (23).

8. Procédé selon la revendication 6 ou 7, **caractérisé en ce que** le tuyau ondulé (20) rebondit élastiquement dès qu'il n'est plus exercé de force sur l'outil d'écartement ou de compression (30), moyennant quoi est obtenue une liaison par friction entre le côté extérieur du tuyau ondulé (20) et la paroi intérieure de la compression (12).

9. Procédé selon l'une des revendications précédentes, **caractérisé en ce que** le perçage (12) présente un fond de perçage (14) et qu'il se trouve dans la zone environnante du fond de perçage (14) une contre-dépouille (16) qui a un plus grand diamètre que les zones avoisinantes du perçage (12).

10. Procédé selon la revendication 9, **caractérisé en ce que** par l'insertion par traction ou par pression du tuyau ondulé (20), il est formé dans la zone d'extrémité du tuyau ondulé une nouvelle ondulation (50) qui est reçue au moins par zones dans la contre-dépouille (16).

11. Procédé selon l'une des revendications précédentes, **caractérisé en ce que** la liaison du tuyau ondulé (20) et de l'autre corps (10) s'étend sur toute la périphérie du tuyau ondulé (20) de façon à obtenir une protection sur 360°.

12. Procédé selon l'une des revendications précédentes, **caractérisé en ce que** le tuyau ondulé (20) est muni au moins dans sa zone recevant le perçage (12) et/ou la paroi intérieure du perçage d'un fluide d'étanchéité et/ou de colle pour obtenir une meilleure étanchéité et/ou résistance mécanique.

13. Agencement avec un tuyau ondulé (20) et un corps (10) relié à celui-ci, **caractérisé en ce que** la liaison entre le tuyau ondulé (20) et le corps (10) a été exécutée conformément à un procédé selon l'une des revendications 1 à 12.

14. Aéronef avec au moins un agencement selon la revendication 13.
